# EUROPÄISCHE PATENTSCHRIFT

(11) **EP 0 990 123 B1**
(45) Veröffentlichungstag und Bekanntmachung des Hinweises auf die Patenterteilung: **20.02.2002**
(21) Anmeldenummer: 98939480.4
(22) Anmeldetag: 22.06.1998
(51) Int. Cl.: G01D 5/20

(54) **WIRBELSTROMSENSOR**
EDDY CURRENT SENSOR
CAPTEUR DE COURANTS DE FOUCAULT

(30) Priorität: 21.06.1997 DE 19726348; 27.11.1997 DE 19752497
(43) Veröffentlichungstag der Anmeldung: 05.04.2000
(73) Patentinhaber: Micro-Epsilon Messtechnik GmbH & Co. KG, 94496 Ortenburg (DE)
(72) Erfinder: MEDNIKOV, Felix, Samara, 443096 (RU); WISSPEINTNER, Karl, D-94496 Ortenburg (DE)
(74) Vertreter: Naumann, Ulrich, Dr.-Ing.
(86) Internationale Anmeldenummer: DE9801709
(87) Internationale Veröffentlichungsnummer: WO9859216

(56) Entgegenhaltungen:
- DE-A- 4 225 968
- PATENT ABSTRACTS OF JAPAN vol. 17, no. 399 (P-1579), 26. Juli 1993 & JP 05 072166 A (MITSUBISHI ELECTRIC CORP), 23. März 1993

## Beschreibung

Die Erfindung betrifft einen Wirbelstromsensor mit einer auf einen Spulenkörper gewickelten Meßspuie mit zwei Anschlüssen, einer Wechselspannungsquelle, einer elektrisch leitenden Meßsonde und einer Auswerteschaltung, wobei die Meßsonde gegenüber der Meßspule verschiebbar ist und die Auswerteschaltung ein Auswertesignal in Abhängigkeit von der Position der Meßsonde erzeugt.

Ein derartiger Wirbelstromsensor ist aus der DE 42 25 968 A1 bekannt. Zur Auswertung der Position der Meßsonde sind dabei mehrere Spannungsabgriffe vorgesehen. Die unterschiedlichen an den Spannungsabgriffen anliegenden Potentiale werden einer Auswerteschaltung zugeführt. Die jeweils zwischen zwei Spannungsabgriffen angeordnete Meßsonde beeinflußt die Teilimpedanz des entsprechenden Spulenabschnitts und damit das Potential an den Spannungsabgriffen. Mit Hilfe der Auswerteschaltung läßt sich daher die Position des Meßobjekts bezüglich der Spannungsabgriffe bestimmen. Dabei besteht der Nachteil, daß das Verhältnis zwischen dem Meßbereich und der Länge des Sensors von der Anzahl der Spannungsabgriffe abhängt. Um einen möglichst großen Meßbereich bezüglich der Positionsbestimmung der Meßsonde zu erhalten, ist eine hohe Anzahl von Spannungsabgriffen der Meßspule erforderlich, was die Komplexität des Meßsensors erhöht. Gleichzeitig muß auch die Länge der Meßsonde angepaßt sein, welche vom Abstand der Spannungsabgriffe abhängig ist.

Der vorliegenden Erfindung liegt daher die Aufgabe zugrunde, einen Wirbelstromsensor der eingangs genannten Art derart weiterzubilden, daß bei einfachem Aufbau des Wirbelstromsensors ein möglichst großes Verhältnis zwischen Meßbereich und Länge des Sensors bezüglich der Messung der Position der Meßsonde erzielbar ist.

Eine andere Aufgabe der Erfindung ist, daß der Sensor eine gute Temperaturstabilität aufweist.

Diese Aufgabe wird erfindungsgemäß durch die Merkmale des Anspruchs 1 gelöst. Danach weist der Wirbelstromsensor eine Elektrode mit einem Abgriff zur elektrischen Kontaktierung auf, die zusammen mit den Wicklungen der Meßspule und einer Zwischenschicht ein Bauelement mit komplexen Impedanzen bildet, aus dessen Ausgangssignalen die Position der Meßsonde bestimmbar ist.

Erfindungsgemäß hat der Wirbelstromsensor dadurch sowohl induktive, als auch Widerstands- und kapazitive Bestandteile, wobei die Meßsonde nur den Teil der Meßspule beeinflußt, den sie überdeckt, aber die Impedanz der Meßspule insgesamt unabhängig von der Position der Meßsonde ist. Dabei kann die Ausdehnung der Meßsonde parallel zur Spulenachse sehr klein, theoretisch unendlich klein, sein.

Dadurch ist es möglich, einen hochauflösenden Wirbelstromsensor mit großem Verhältnis, bis zu 90%, zwischen dem Meßbereich und der Länge des Sensors, mit lediglich zwei Anschlüssen an der Meßspule und einem weiteren Abgriff der Elektrode bereitzustellen. Die zwei Anschlüsse sind dabei insbesondere mittelbar, d.h. über eine Beschaltung, oder unmittelbar mit den Klemmen einer Wechselspannungsquelle verbunden.

Durch den einfachen Aufbau des Wirbelstromsensors läßt sich dieser preisgünstig produzieren und hat lediglich drei Anschlüssse zur Kontaktierung der Spannungsversorgung bzw. der Auswerteschaltung. Infolgedessen kann der Wirbelstromsensor auch noch kompakter aufgebaut sein, da die Breite der Meßsonde sehr klein sein und die Meßspule eine geringere Länge in Achsenrichtung aufweisen kann. Darüber hinaus beeinflussen die Abmessungen der Meßsonde das Meßergebnis in geringerem Maße als bei der Lösung mit den Spannungsabgriffen. Dadurch ist der erfindungsgemäße Wirbelstromsensor besonders auch für die Miniaturisierung geeignet.

Bevorzugt ist die Zwischenschicht als Elektrode, als Leiterbahn oder -platte ausgebildet und parallel zur Achse der Meßspule angeordnet. Durch die parallele Anordnung entsteht eine Impedanz mit induktiven, kapazitiven und ohmschen Widerstandsbestandteilen, wobei der kapazitive Bestandteil zwischen der Zwischenschicht und den Wicklungen der Meßspule gebildet ist Im Zusammenhang mit einer achsparallelen Verschiebung der Meßsonde wird das Bauelement mit komplexen Impedanzen auch in parallel zur Achse der Meßspule angeordneten Bereichen beeinflußt, was zu Ausgangssignalen führt, die sich zur einfachen Auswertung durch eine Auswerteschaltung heranziehen lassen.

Bei einer Weiterbildung der Erfindung ist der gesamte Spulenkörper als Elektrode ausgebildet und besteht aus einem Material mit geringem elektrischen Widerstand, insbesondere einem ferromagnetischen Material. Dadurch ist einerseits der Spulenkörper in einfacher Form aus einheitlichem Material herstellbar und die Elektrode hat vorteilhaft eine besonders große Fläche. Der Spulenkörper kann als rohrartiges Bauteil ausgebildet sein.

Zwischen den Wicklungen der Meßspule und dem Spulenkörper wird eine Zwischenschicht angebracht. Diese Zwischenschicht kann auf der Oberfläche des Spulenkörpers aufgebracht sein. Durch die Materialeigenschaften und Geometrie der Zwischenschicht (elektrische Leitfähigkeit " δ ", Dielektrizitätszahl " ε ", Dicke) ist der Übergangswiderstand zwischen Wicklungen der Meßspule und Elektrode veränderbar.

Dabei kann die Meßspule aus isolierten oder blanken Drähten gewickelt sein. Werden blanke Drähte verwendet, müssen die Windungen in einem bestimmten Abstand zueinander gewickelt werden.

Bei einer anderen Weiterbildung der Erfindung dient die Isolationsschicht des Wicklungsdrahtes als die Zwischenschicht zwischen dem Spulenkörper und der Elektrode. In diesem Fall dominiert der kapazitive Bestandteil des Wirbelstromsensors, weil der ohmsche Widerstand der Zwischenschicht sehr groß ist.

Ist dagegen der ohmsche Anteil R kleiner als der kapazitive Anteil C der Zwischenschicht und dabei wesentlich größer als die Impedanz der Meßspule Ż_{I}, pro Längeneinheit, so ist das Ausgangssignal im wesentlichen vom ohmschen Anteil R abhängig.

Bei einer anderen vorteilhaften Weiterbildung der Erfindung ist der Spulenkörper ein Isolator und ein um die Meßspule angeordnetes Gehäuse bildet die Elektrode. Dabei kann das Gehäuse aus einem leitenden, nicht ferromagnetischem Material, insbesondere einem rostfreien Stahl, hergestellt sein. Besonders im Zusammenhang mit einer innerhalb des Spulenkörpers geführten Meßsonde läßt sich dadurch ein kompakter und gekapselter Wirbelstromsensor herstellen. Die Zwischenschicht kann einen komplexen Übergangswiderstand zwischen den Wicklungen der Meßspule und der Elektrode mit einem negativen oder positiven Temperaturkoeffizienten aufweisen. Dadurch läßt sich der Temperatureinfluß auf das Ausgangssignal des Wirbelstromsensors kompensieren.

Bevorzugt ist der elektrische Widerstandswert der Elektrode pro Längeneinheit viel größer als der Widerstandswert der Meßsonde pro Längeneinheit. Dadurch lassen sich Wirbelstromeffekte in der Elektrode und Meßsonde gezielt beeinflussen.

Die Meßsonde ist als ein um die Meßspule angeordneter, elektrisch leitender Ring ausgebildet und ist kontaktlos auf der Außenoberfläche der Meßspule entlang der Achse der Meßspule verschiebbar. Die Meßsonde kann jedoch auch innerhalb des Spulenkörpers in einem parallel zur Spulenachse angeordneten Kanal verschiebbar angeordnet sein. Dadurch liegt die Meßsonde innerhalb der Meßspule geschützt und kann sehr klein ausgeführt sein. Die Meßsonde kann dabei auch Bestandteil eines Meßobjekts sein oder das Meßobjekt selbst bilden. Im letztgenannten Fall können bspw. innerhalb eines rohrartigen Spulenkörpers angeordnete Partikel als Meßsonde ausgeführt sein.

Bei einer besonders bevorzugten Ausführungsform sind die Elektrode, die Zwischenschicht und der Spulenkörper mit jeweils ihren Längsachsen parallel zur Achse der Meßspule ausgerichtet und/oder die Auslenkung der Meßsonde erfolgt parallel zur Achse der Meßspule. Dadurch entsteht eine einfache lineare Anordnung, die leicht auszuwertende Ausgangssignale für eine Auswerteschaltung erzeugt

Bei einer anderen'bevorzugten Weiterbildung der Erfindung bildet der Spulenkörper, ggf. mit der Elektrode, einen geschlossenen Ring und die Meßsonde ist entlang des Rings verschiebbar gelagert. Dabei kann die Meßsonde wiederum einen um den Spulenkörper und die Meßspule angeordneten Ring bilden oder innerhalb des Spulenkörpers in einem Kanal gelagert sein. Diese Ausführungsform eignet sich besonders zur Erfassung von Winkeländerungen, die ein mit der Meßsonde verbundenes Meßobjekt ausführt.

Bei einer bevorzugten Weiterbildung der Erfindung sind beide Anschlüsse der Meßspule mit einer Wechselspannungsquelle verbunden und die Auswerteschaltung weist einen Operationsverstärker auf, dessen Eingang mit dem Abgriff der Elektrode verbunden ist Erfindungsgemäß kann der invertierende Eingang des Operationsverstärkers mit dem Abgriff der Elektrode verbunden sein. Die Auswerteschaltung erfaßt aufgrund der Ausgangssignaländerung am Wirbelstromsensor, d.h. der Spannungsänderung, die Position bzw. die Positionsänderung der Meßsonde gegenüber der Meßspule.

Bei einer anderen Weiterbildung der Erfindung ist zwischen dem Abgriff der Elektrode und dem Anschluß der Meßspule eine Wechselspannung angelegt und der zweite Anschluß der Meßspule ist mit einem Eingang eines Operationsverstärkers der Auswerteschaltung verbunden. Bevorzugt ist der Anschluß der Meßspule mit dem invertierenden Eingang des Operationsverstärkers verbunden. Auch diese Auswerteschaltung ist durch Widerstände und Kondensatoren derart beschaltet, daß ein Vergleichen oder Addieren von Ausgangsspannungen ermöglicht wird.

Bei einer anderen Weiterbildung der Erfindung weist die Meßspule einen weiteren Anschluß, insbesondere als Mittelabgriff der Meßspule auf. Der Mittelabgriff ist über einen Tiefpaß mit einem invertierenden Eingang eines Operationsverstärkers verbunden. Das Ausgangssignal kann zur Kompensation des Temperaturgradienten-Einflusses der Impedanz des Wirbelstromsensors verwendet werden.

Schließlich kann der Abgriff der Elektrode noch mit der Masse verbunden sein. Die beiden Anschlüsse der Meßspule sind dann bspw. mit einer Wechselspannungsquelle und mit dem Eingang eines Operationsverstärkers verbunden.

Sämtliche Komponenten des Sensors können auf einem Chip, bspw. als magnetoresistive oder fotoresestive Struktur, miniaturisiert sein.

Weitere Vorteilhafte Ausführungsformen der Erfindung ergeben sich aus den Unteransprüchen und der Beschreibung. Mehrere Ausführungsbeispiele der Erfindung sind in der Zeichnung dargestellt und werden nachfolgend beschrieben. Es zeigen, jeweils in schematischer Darstellung,
- Fig. 1: eine vereinfachte Darstellung des erfindungsgemäßen Wirbelstromsensors nach einem ersten Ausführungsbeispiel,
- Fig. 2a: ein Ersatzschaltbild des Wirbelstromsensors nach Fig. 1,
- Fig. 2b: ein Funktionsschaubild, in dem die Veränderung der Meßspannung U in Abhängigkeit von der Auslenkung der Meßspule gezeigt ist,
- Fig. 3: einen Schnitt durch einen erfindungsgemäßen Wirbelstromsensor nach einem zweiten Ausführungsbeispiel,
- Fig. 4: einen Schnitt durch einen erfindungsgemäßen Wirbelstromsensor nach einem dritten Ausführungsbeispiel,
- Fig. 5: einen Schnitt durch einen erfindungsgemäßen Wirbelstromsensor nach einem vierten Ausführungsbeispiel,
- Fig. 6: einen Schnitt durch einen erfindungsgemäßen Wirbelstromsensor zur Erfassung von Wegänderungen gemäß einem fünften Ausführungsbeispiel,
- Fig. 7a: einen erfindungsgemäßen Wirbelstromsensor mit einer ersten Auswerteschaltung,
- Fig. 7b: einen erfindungsgemäßen Wirbeistromsensor mit einer zweiten Auswerteschaltung,
- Fig. 7c: einen erfindungsgemäßen Wirbelstromsensor mit einer dritten Auswerteschaltung,
- Fig. 7d: einen erfindungsgemäßen Wirbelstromsensor mit einer vierten Auswerteschaltung, und
- Fig. 8: einen zur Miniaturisierung geeigneten magnetorestistiven Wirbelstromsensor.

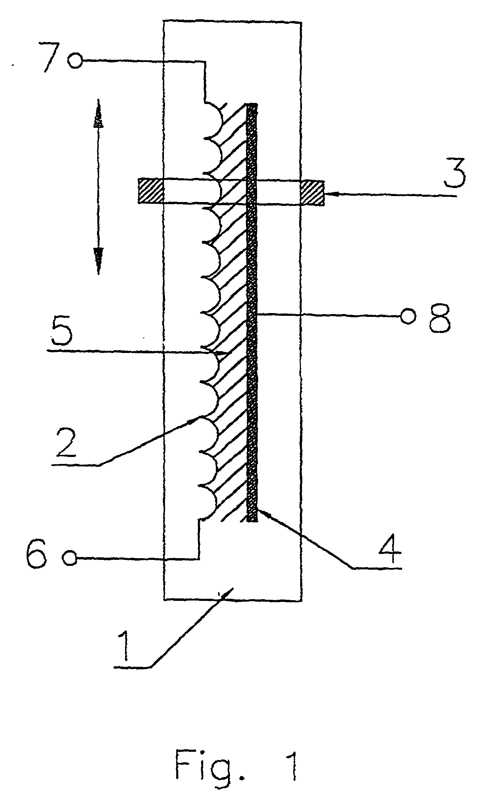

in Fig. 1 ist der erfindungsgemäße Wirbelstromsensor 1 mit einer Meßspule 2 und einer ringförmigen Meßsonde 3 dargestellt. Der Wirbelstromsensor 1 weist eine parallel zur Achse der Meßspule 2 angeordnete Elektrode 4 und eine zwischen der Meßspule 2 und der Elektrode 4 angeordnete Zwischenschicht 5 auf. Die Zwischenschicht 5 besteht aus einem Isoliermaterial das parallel zur Achse der Meßspule 2 angeordnet ist und ein Material mit elektromagnetischen und elektrisch verteilten Parametern aufweist. Die Meßspule 2 weist zwei Anschlüsse 6 und 7 zur elektrischen Kontaktierung auf. Ebenso weist die als Leiterbahn ausgeführte- Elektrode 4 einen Abgriff 8 auf, um daran insbesondere eine Auswerteschaltung zur Erfassung der Position der Meßsonde 3 anzuschließen. Die Meßspule 2 ist bevorzugt als einlagige Spule ausgeführt und der Wirbelstromsensor 1 kann in der Art von Halbleitertransistoren eine homogene dreipolige Struktur bilden.

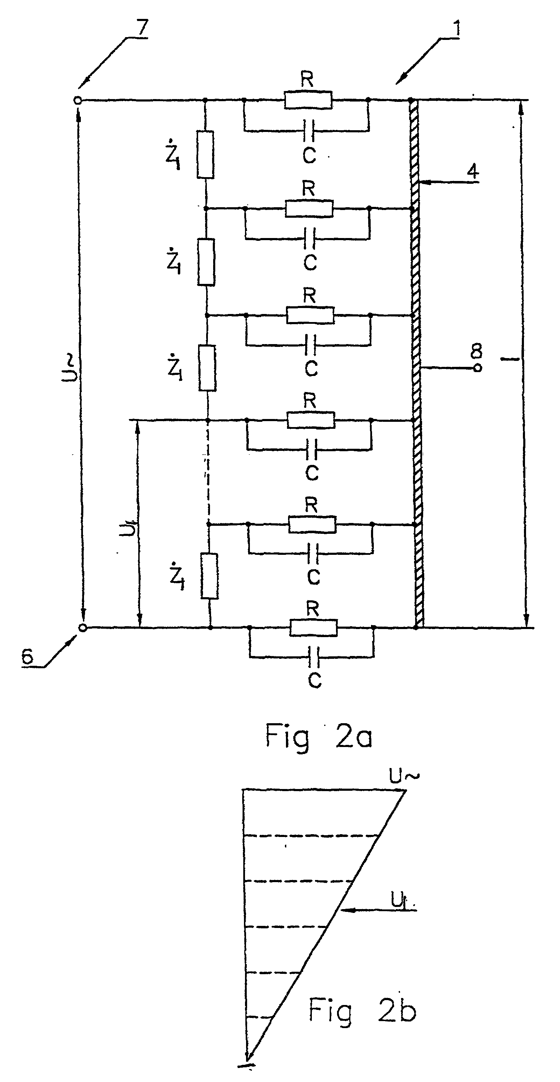

Fig. 2a zeigt das elektrische Ersatzschaltbild des Wirbelstromsensors 1 mit der homogenen Struktur der Länge I. Dabei läßt sich der induktive, kapazitive und Widerstands-Anteil des Wirbelstromsensors 1 bei einer homogenen Struktur der Länge I durch eine komplexe Impedanz Ż_{I} und durch eine zum ohmschen Widerstand R parallel geschaltete Kapazität C darstellen.

Dabei ist Ż_{I} jeweils die Impedanz der Meßspule 2 pro Längeneinheit, R der Widerstand der Zwischenschicht 5, d.h. der ohmsche Übergangswiderstand zwischen der Meßspule 2 und der Elektrode 4 pro Längeneinheit sowie C die Kapazität zwischen der Meßspule 2 und der Elektrode 4 pro Längeneinheit.

Dabei ist jeweils der Widerstand der Elektrode 4 vernachlässigt, der Widerstand R ist viel größer als die Impedanz Ż_{I} der Meßspule 2 pro Längeneinheit und der Wert 1/jωC des kapazitiven Anteils pro Längeneinehit ist viel größer als die Impedanz Ż_{I} der Meßspule 2 pro Längeneinheit.

Wenn das Gesamtpotential U̇_{∼} zwischen den Punkten 6 und 7 anliegt, ändert sich unter diesen Bedingungen das Potential U̇_{I} entlang der Meßspule 2 praktisch linear. Dieser Zusammenhang ist in Fig. 2b gezeigt. Da, wie in Fig. 2a dargestellt, der ohmsche zum kapazitiven Anteil einer homogenen Struktur parallel geschaltet ist, dominiert in Abhängigkeit der Materialeigenschaften der Zwischenschicht 5 (elektrische Leitfähigkeit δ , Dielektrizitätszahl ε, Abstand zwischen den Windungen der Meßspule 2 und der Elektrode 4) und der Frequenz entweder der ohmsche oder der kapazitive Anteil der Übergangsimpedanz zwischen der Meßspule 2 und der Elektrode 4.

Dabei kann die Meßspule 2 aus isolierten oder blanken Drähten gewickelt sein. Werden blanke Drähte verwendet, müssen die Windungen in einem bestimmten Abstand gewickelt werden.

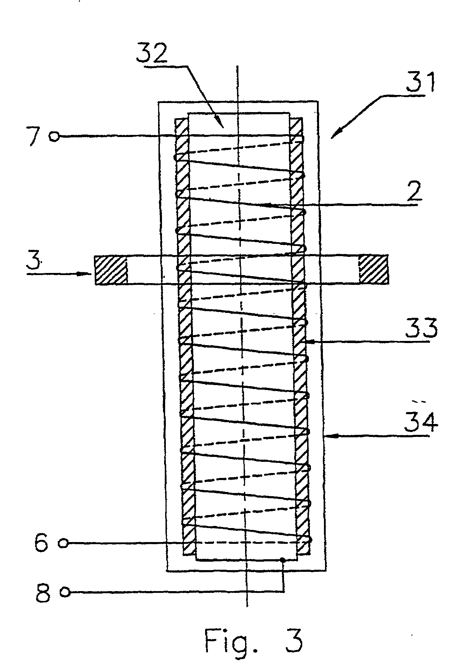

Fig. 3 zeigt die einfachste Ausführungsform der Erfindung, wobei der Wirbelstromsensor 31 einen zylinderförmig ausgebildeten Spulenkörper 32 mit der einlagig darauf gewickelten Meßspule 2 aufweist. Zwischen der äußeren Oberfläche des Spulenkörpers 32 und den Wicklungen der Meßspule 2 ist eine Zwischenschicht 33 auf die Oberfläche des Spulenkörpers 32 aufgebracht. Der Spulenkörper 32 ist aus einem Material mit geringem elektrischen Widerstand hergestellt, z.B. einem ferromagnetischen Stahl. Die Meßspule 2, der Spulenkörper 32 und die Zwischenschicht 33 sind in einem Gehäuse 34 angeordnet. Die Meßsonde 3 ist parallel zur Achse der Meßspule 2 verschiebbar und gegenüber den Wicklungen der Meßspule 2 isoliert. Der Spulenkörper 32, der als Elektrode wirkt, weist einen Abgriff 8 auf. Die Meßsonde 3 besteht aus einem elektrisch leitenden Material und ist ringförmig ausgebildet, so daß Wirbelströme darin erzeugbar sind. Das Gehäuse 34 kann aus Kunststoff oder aus nicht ferromagnetischem Stahl hergestellt sein.

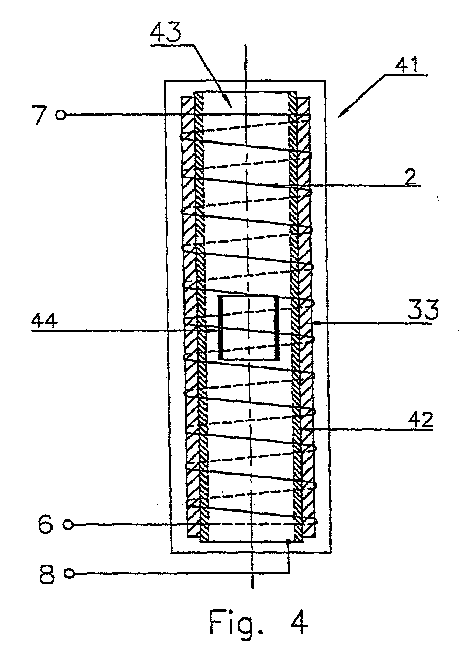

Der in Fig. 4 dargestellte Wirbelstromsensor 41 weist einen aus nicht ferromagnetischem, rostfreiem Stahl hergestellten Spulenkörper 42 auf, der in Form eines Rohres ausgebildet ist und innen einen zylinderförmigen Kanal 43 aufweist. In dem Kanal 43 ist eine Meßsonde 44 in Form eines ferromagnetischen Kerns axial verschiebbar angeordnet. Auf dem Spulenkörper 42 an der äußeren Oberfläche ist wiederum die Zwischenschicht 33 aufgebracht, um die Meßspule 2 gegenüber dem Spulenkörper 42 zu isolieren.

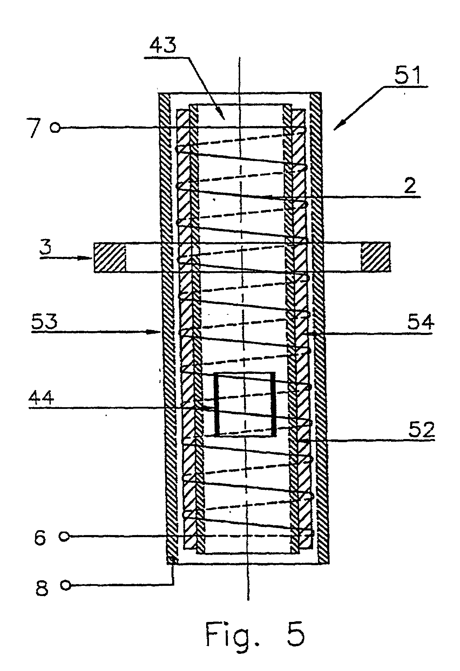

Der in Fig. 5 dargestellte Wirbelstromsensor 51 weist einen nicht leitenden Spulenkörper 52, insbesondere aus Kunststoff, mit einer auf dessen äußeren Oberfläche aufgewickelten einlagigen Meßspule 2 auf, die gegenüber einem äußeren zylinderförmigen Gehäuse 53 durch eine Zwischenschicht 54 getrennt ist. Das Gehäuse 53 kann aus leitendem, nicht ferromagnetischem Material hergestellt sein und von einer ersten leitenden Meßsonde 3 ringförmig umschlossen sein. Alternativ oder zusätzlich kann eine andere Meßsonde 44 in einem Kanal 43 im Spulenkörper 52 angeordnet sein. Das Gehäuse 53 ist bei dieser Ausführungsform als Elektrode ausgebildet.

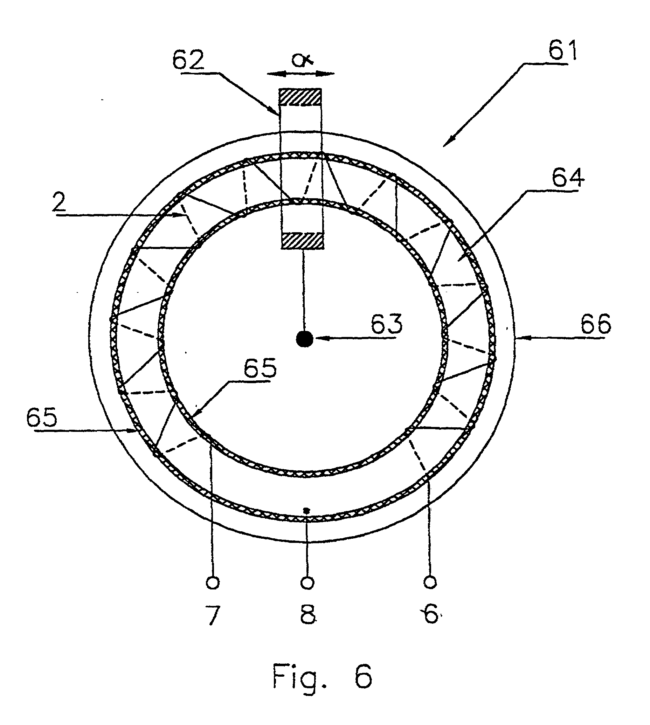

In Fig. 6 ist der Wirbelstromsensor 61 zur Erfassung von Winketänderungen der Meßsonde 62 vorgesehen. Die Meßsonde 62 ist an einer Lagerung 63 um einen Winkel verdrehbar gelagert. Eine Meßspule 64 ist einlagig auf einen Spulenkörper 64 aus Stahl gewickelt und durch eine Zwischenschicht 65 getrennt. Der Spulenkörper 64 ist als Elektrode ausgebildet und mit dem Abgriff 8 verbunden. Der Wirbelstromsensor 61 weist ein Gehäuse 66 auf, um das die ringförmige Meßsonde 62 geführt ist. Das Gehäuse 65 besteht aus einem Isolationsmaterial.

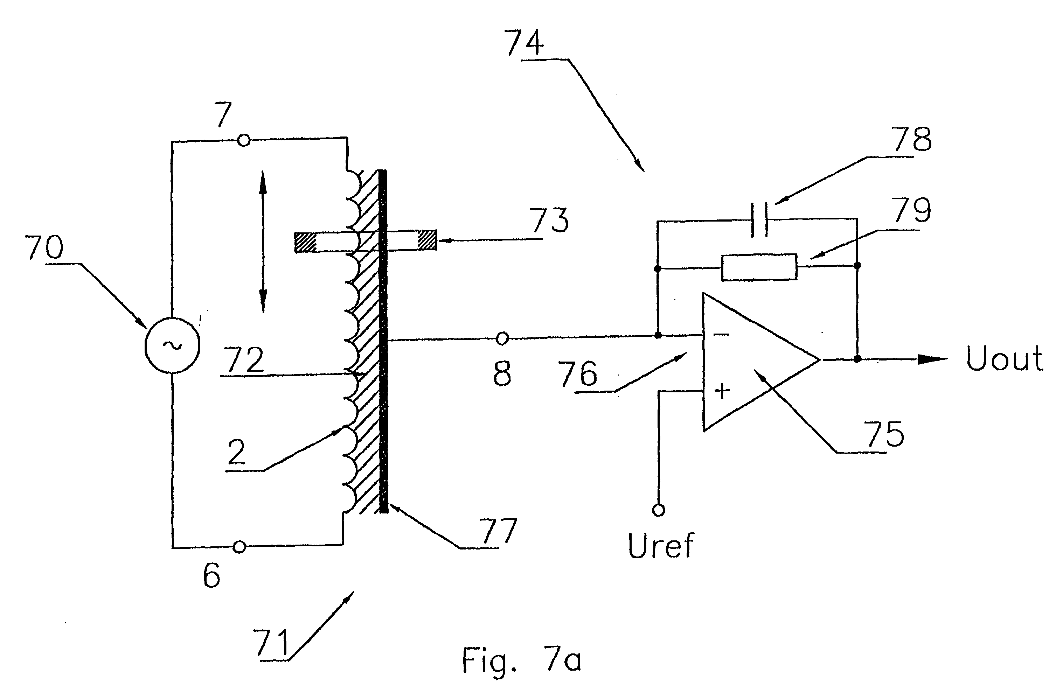

In Fig. 7a ist ein Wirbelstromsensor 71, der eine Zwischenschicht 72 und eine axial verschiebbare Meßsonde 73 aufweist, mit einer Auswerteschaltung 74 versehen, um die Position der Meßsonde 73 zu erfassen. Die Auswerteschaltung 74 weist einen Operationsverstärker 75 auf, der über seinen invertierenden Eingang 76 mit dem Abgriff 8 der Elektrode 77 verbunden ist. Die Übergangsimpedanz der Zwischenschicht 72 ist größer als die induktive Impedanz der Spule 2. Dadurch ändert sich die Spannung entlang der Meßspule 2 zwischen den Anschlüssen 6 und 7 linear. Dazu ist erforderlich, daß an den Anschlüssen 6 und 7 der Meßspule 2 eine Wechselspannungsquelle 70 angeschlossen ist. Die linear veränderliche induzierte Spannung wird über einen Addierer der Auswerteschaltung, die aus dem Operationsverstärker 75, einem Kondensator 78 und einem Widerstand 79 besteht, zu einer Ausgangsspannung Uₒᵤₜ aufsummiert. In der Auswerteschaltung 74 wird die Addition der Spannungswerte Uₑ mit einem summierenden Operationsverstärker 75 durchgeführt. Das Potential des invertierenden Eingangs 76 des Operationsverstärkers 75 ist Null, das bedeutet, daß die Spannungswerte U_{I} unabhängig von einander addiert werden können.

Wenn die Meßspule 2 mit zwei zueinander komplementären Spannungen gespeist wird, d.h. symmetrisch zum Referenzpotential U_{ref} ist, und die Meßsonde 73 sich in der Mitte der Meßspule 2 befindet, ist Uₒᵤₜ = 0. Wenn die Meßsonde 73 aus der Mitte ausgelenkt wird, ändert sich die Ausgangsspannung Uₒᵤₜ proportional und die Phase ändert sich um 180°.

Der Einfluß der Temperatur auf die Stabilität der Ausgangsspannung Uₒᵤₜ kann eliminiert werden, wenn die Zwischenschicht aus einem Isolationsmaterial gefertigt wird (R >> jωC) und die Dielektrizitätszahl ε des Isolationsmaterials einen negativen Temperaturkoeffizienten aufweist, wenn die Meßspule 2 einen positiven Temperaturkoeffizienten besitzt.

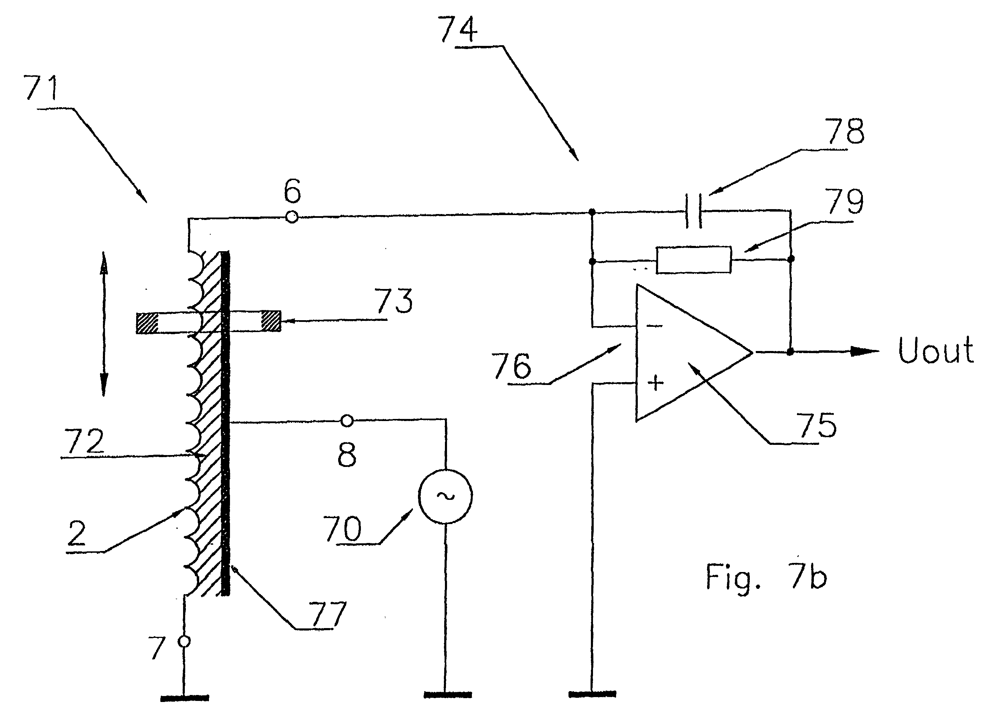

In der Fig. 7b ist der Wirbelstromsensor 71 mit anderer Beschaltung durch eine Wechselspannungsquelle 70 und die Auswerteschaltung 74 dargestellt. Dabei liegt die Meßspule 2 mit ihrer Ausgangsklemme 7 auf Masse und ist mit ihrem Anschluß 6 mit der Auswerteschaltung 74 verbunden. Der Operationsverstärker 75 ist mit seinem nicht invertierenden Eingang auf Masse gelegt und erzeugt an seinem Ausgang das Auswertesignal Uₒᵤₜ. Der Abgriff 8 der Elektrode 77 ist mit der Wechselspannungsquelle 70 verbunden. Die Zwischenschicht 72 ist aus einem Isolationsmaterial hergestellt (R >> jωC). In diesem Fall kann die Dielektrizitätszahl ε des Isolationsmaterials einen positiven Temperaturkoeffizienten aufweisen, damit der Temperatureinfluß auf das Auswertesignal Uₒᵤₜ kompensiert wird.

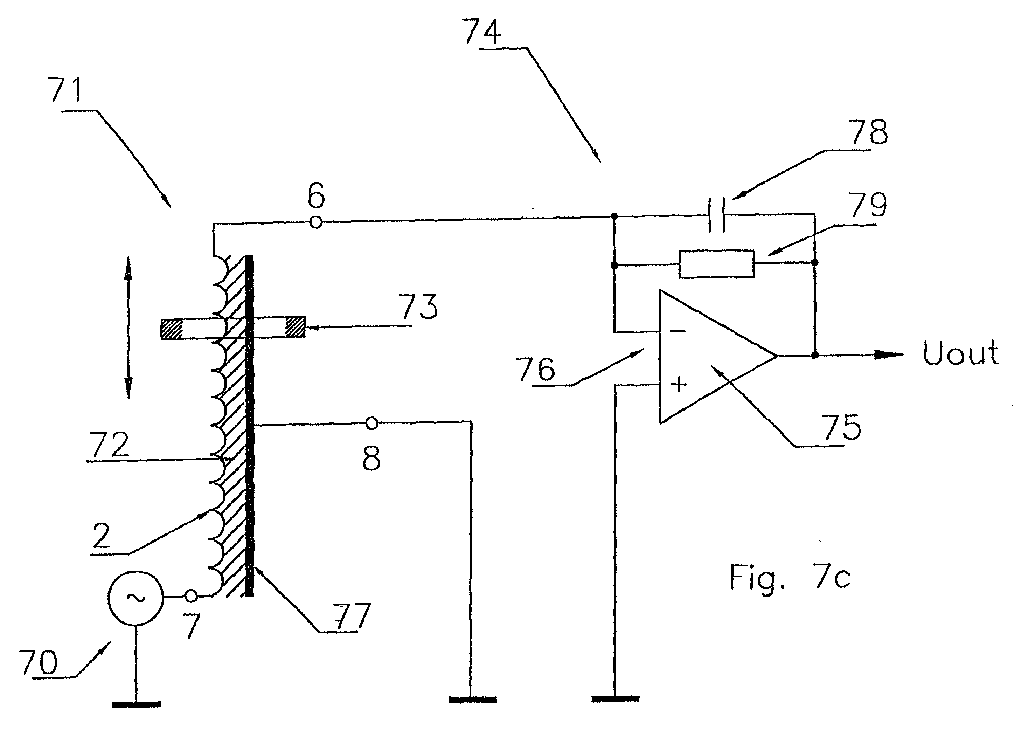

In Fig. 7c ist eine weitere Beschaltung des Wirbesltromsensors 71 dargestellt Dabei ist die Meßspule 2 mit ihrem Anschluß 7 an die Wechselspannungsquelle 70 angeschlossen und mit ihrem Anschluß 6 mit der Auswerteschaltung 74 verbunden. Der Abgriff 8 der Elektrode 77 und der nicht invertierende Ausgang des Operationsverstärkers 75 liegen auf Masse. Das Auswertesignal Uₒᵤₜ gibt wiederum Aufschluß über die Position der Meßsonde 73. In beiden letztgenannten Beschaltungen des Wirbelstromsensors 71 ist bei bestimmten Frequenzen eine Stromresonanz erzielbar. Dadurch ist eine maximale Empfindlichkeit, d.h. eine maximale Auflösung des Auswertesignals Uₒᵤₜ möglich.

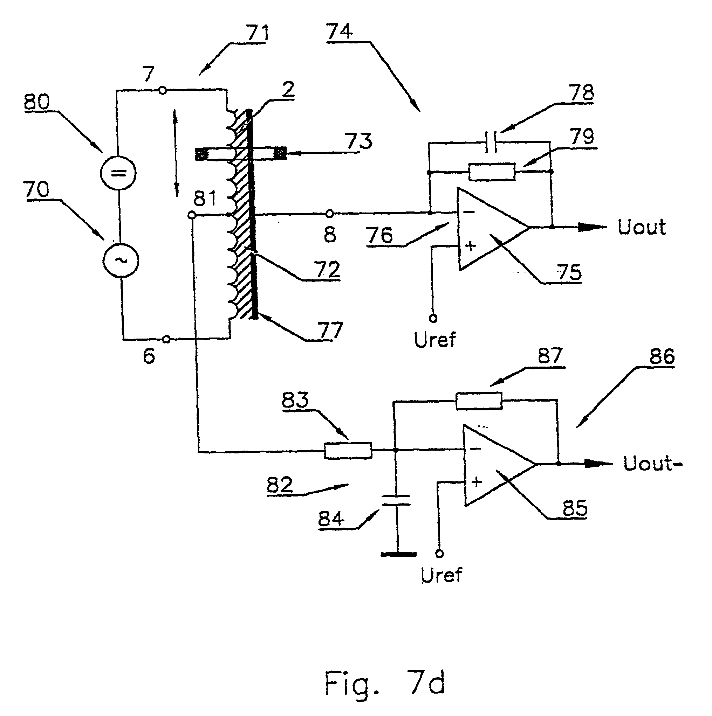

Der Wirbelstromsensor 71 in Fig. 7d ist mit seinen Anschlüssen 6 und 7 mit der Wechselspannungsquelle 70 und zusätzlich mit einer Gleichspannungsquelle 80 verbunden. Die Gleichspannungsquelle kann dabei beliebig gepolt und ein- und ausschaltbar sein. Dadurch überlagert sich die Wechselspannung der Wechselspannungsquelle 70 mit einer Gleichspannung. Die Gleichspannungsquelle 80 kann aber auch ein- und ausschaltbar sein, so daß ein gepulster Strom entsteht. Die Elektrode 77 ist über ihren Abgriff 8 mit der schon beschriebenen Auswerteschaltung 74 verbunden, wobei der nicht invertierende Ausgang des Operationsverstärkers 75 auf Referenzpotential liegt. Die Auswertespannug Uₒᵤₜ ist durch den Operationsverstärker 75 am Ausgang erzeugbar. Die Spule 2 weist einen Mittelabgriff 81 auf, mit dem sie über einen Tiefpaß 82, der zumindest einen Widerstand 83 und einen Kondensator 84 aufweist, am Operationsverstärker 85 der Auswerteschaltung 86 angeschlossen ist. Der Operationsverstärker 85 ist über einen weiteren Widerstand 87 beschaltet Das Auswertesignal Uₒᵤₜ₋ des Operationsverstärkers 85 (Konstantspannung) ist zum Temperaturgradienten proportional und unabhängig von der Position der Meßsonde 73. Das Ausgangssignal Uₒᵤₜ₋ des Operationsverstärkers 85 kann von dem Auswertesignal Uₒᵤₜ des Operationsverstärkers 75, das der Positionsänderung der Meßsonde 73 proportional ist, subtrahiert werden. Vor der Subtraktion kann das Auswertesignal Uₒᵤₜ₋ mit einem entsprechenden Übertragungsfaktor multipliziert sein. Auf diese Weise lassen sich Temperaturgradienteinflüsse besonders einfach und effektiv kompensieren.

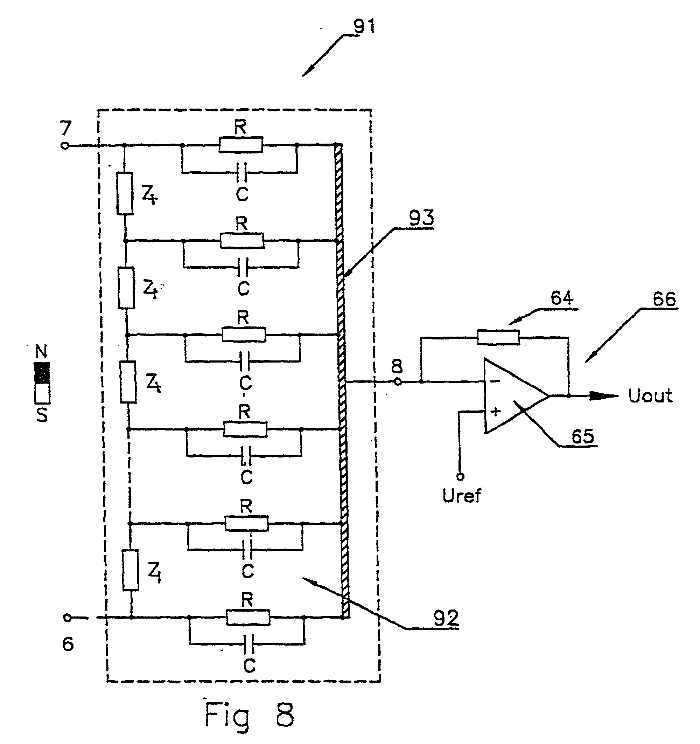

Fig. 8 zeigt einen zur Miniaturisierung geeigneten magnetoresistiven Wirbelstromsensor. Der Wirbelstromsensor 91 weist eine Zwischenschicht 92 und eine Elektrode 93 auf. Die Elektrode 93 ist über den Abgriff 8 in schon beschriebener Weise mit der Auswerteschaltung-75 verbunden, die das Auswertesignal Uₒᵤₜ erzeugt. Als Alternative kann statt der magnetoresistiven auch eine fotoresistive Struktur zur Herstellung des Wirbelstromsensors 91 vorgesehen sein. Auf diese Weise läßt sich der Wirbelstromsensor 91 in stark verkleinerter Form auf einem Chip unterbringen, so daß lediglich ein geringer Raumbedarf für den Wirbelstromsensor 91 erforderlich ist.

## Patentansprüche

1. Wirbelstromsensor mit einer auf einen Spulenkörper (32; 42; 52; 64) gewickelten Meßspule (2) mit zwei Anschlüssen (6, 7), einer Wechselspannungsquelle (70), einer elektrisch leitenden Meßsonde (3; 44; 62; 73) und einer Auswerteschaltung (74), wobei die Meßsonde (3; 44; 62; 73) gegenüber der Meßspule (2) verschiebbar ist und die Auswerteschaltung (74) ein Auswertesignal (Uₒᵤₜ) in Abhängigkeit von der Position der Meßsonde (3; 44; 62; 73) erzeugt,
**dadurch gekennzeichnet, daß** der Wirbelstromsensor (1; 31; 41; 51; 61; 71; 91) eine Elektrode (4; 32; 42; 64; 77; 93) mit einem Abgriff (8) zur elektrischen Kontaktierung aufweist, die zusammen mit den Wicklungen der Meßspule (2) und einer Zwischenschicht (5; 33; 54; 65; 72; 92) ein Bauelement mit komplexen Impedanzen bildet, aus dessen Ausgangssignalen die Position der Meßsonde (3; 44; 62; 73) bestimmbar ist.

2. Wirbelstromsensor nach Anspruch 1, **dadurch gekennzeichnet, daß** die Elektrode (4; 32; 42; 64; 77; 93) als Leiterbahn oder -platte ausgebildet und parallel zur Achse der Meßspule (2) angeordnet ist.

3. Wirbelstromsensor nach Anspruch 1, **dadurch gekennzeichnet, daß** der gesamte Spulenkörper (32; 42; 64; 77) als Elektrode ausgebildet ist und aus einem Material mit geringem elektrischen Widerstand, insbesondere einem ferromagnetischen Material, besteht.

4. Wirbelstromsensor nach einem der Ansprüche 1 bis 3, **dadurch gekennzeichnet, daß** die Zwischenschicht (5; 33; 54; 65; 72; 92) die Wicklungen der Meßspule (2) gegenüber der Elektrode (4; 32; 42; 64; 77; 93) elektrisch isoliert, vorzugsweise aus einem Material mit hohem elektrischen Widerstand hergestellt und ggf. eine Isolationsschicht des Wickeldrahtes der Meßspule (2) ist.

5. Wirbelstromsensor nach Anspruch 1, **dadurch gekennzeichnet, daß** der Spulenkörper (52) einen Isolator und ein um die Meßspule (2) angeordnetes Gehäuse (53) der Elektrode bildet, wobei das Gehäuse (53) aus einem leitenden, nicht ferromagnetischen Material, insbesondere einem rostfreien Stahl, hergestellt sein kann.

6. Wirbelstromsensor nach einem der Ansprüche 1 bis 5, **dadurch gekennzeichnet, daß** der elektrische Widerstand der Zwischenschicht (5; 33; 54; 65; 72; 92) einen negativen oder positiven Temperaturkoeffizient aufweist.

7. Wirbelstromsensor nach einem der Ansprüche 1 bis 6, **dadurch gekennzeichnet, daß** der elektrische Widerstandswert der Elektrode (4; 32; 42; 64; 77; 93) pro Längeneinheit viel kleiner als die Impedanz der Meßspule (2) pro Längeneinheit ist.

8. Wirbelstromsensor nach einem der Ansprüche 1 bis 7, **dadurch gekennzeichnet, daß** die Meßsonde (3; 62; 73) als um die Meßspule (2) angeordneter elektrisch leitender Ring ausgebildet ist, wobei die Meßsonde (44) innerhalb des Spulenkörpers (42; 52) in einem parallel zur Spulenachse angeordneten Kanal (43) verschiebbar angeordnet ist.

9. Wirbelstromsensor nach einem der Ansprüche 1 bis 8, **dadurch gekennzeichnet, daß** die Elektrode (4; 32; 42; 64; 77; 93), die Zwischenschicht (5; 33; 52; 65; 72; 92) und der Spulenkörper (32; 42; 54; 64; 77) mit jeweils ihren Längsachsen parallel zur Achse der Meßspule (2) ausgerichtet sind und/oder die Auslenkung der Meßsonde (3; 44; 62; 73) parallel zur Achse der Meßspule (2) erfolgt.

10. Wirbelstromsensor nach einem der Ansprüche 1 bis 9, **dadurch gekennzeichnet, daß** der Spulenkörper (64) einen geschlossenen Ring oder ein Rohr bildet und die Meßsonde (62) zur Erfassung von Winkeländerungen entlang des Rings bzw. Rohres verschiebbar gelagert ist.

11. Wirbelstromsensor nach einem der Ansprüche 1 bis 10, **dadurch gekennzeichnet, daß** beide Anschlüsse (6, 7) der Meßspule (2) mit einer Wechselspannungsquelle (70) verbunden sind und die Auswerteschaltung (74) einen Operationsverstärker (75) aufweist, dessen invertierender Eingang (76) mit dem Abgriff (8) der Elektrode (4; 32; 42; 64; 77; 93) verbunden ist, wobei zwischen dem Abgriff (8) der Elektrode (4; 32; 42; 64; 77; 93) und einem Anschluß (7) der Meßspule (2) eine Wechselspannung anliegen kann und der zweite Anschluß (6) der Meßspule (2) mit einem invertierenden Eingang (76) eines Operationsverstärkers (75) der Auswerteschaltung (74) verbunden sein kann, wobei die Meßspule (2) einen weiteren Anschluß, insbesondere als Mittelabgriff (81) der Meßspule (2), aufweisen kann, der über einen Tiefpaß (82) mit einem invertierenden Eingang (76) eines Operationsverstärkers (75) verbunden ist sein kann und wobei der Abgriff (8) der Elektrode (77) mit der Masse verbunden sein kann.

12. Wirbelstromsensor nach einem der Ansprüche 1 bis 11, **dadurch gekennzeichnet, daß** die Meßspule (2) mit einem bestimmten Abstand zueinander gewickelte, blanke Drähte aufweist.

13. Wirbelstromsensor nach einem der Ansprüche 1 bis 12, **dadurch gekennzeichnet, daß** sämtliche Komponenten des Sensors miniaturisiert auf einem Chip, bspw. als magnetoresistive oder fotoresistive Struktur ausgebildet sind.

## Claims

1. Eddy current sensor having a measuring coil (2) which is wound onto a coil element (32; 42; 52; 64) and which has two connections (6, 7), an alternating voltage source (70), an electrically conductive measuring probe (3; 44; 62; 73) and an evaluation circuit (74), the measuring probe (3; 44; 62; 73) being displaceable relative to the measuring coil (2) and the evaluation circuit (74) producing an evaluation signal (Uₒᵤₜ) as a function of the position of the measuring probe (3; 44; 62; 73), **characterised in that** the eddy current sensor (1; 31; 41; 51; 61; 71; 91) has an electrode (4; 32; 42; 64; 77; 93) which has a pickup (8) for electrical contacting and which, together with the windings of the measuring coil (2) and an intermediate layer (5; 33; 54; 65; 72; 92), forms a structural element which has complex impedances and from the output signals of which the position of the measuring probe (3; 44; 62; 73) can be determined.

2. Eddy current sensor according to claim 1, **characterised in that** the electrode (4; 32; 42; 64; 77; 93) is in the form of a printed conductor or a printed board and is arranged parallel with the axis of the measuring coil (2).

3. Eddy current sensor according to claim 1, **characterised in that** the whole coil element (32; 42; 64; 77) is in the form of an electrode and comprises a material having weak electrical resistance, in particular a ferromagnetic material.

4. Eddy current sensor according to any one of claims 1 to 3, **characterised in that** the intermediate layer (5; 33; 54; 65; 72; 92) electrically isolates the windings of the measuring coil (2) relative to the electrode (4; 32; 42; 64; 77; 93), is preferably produced from a material having great electrical resistance and is optionally an isolating layer of the winding wire of the measuring coil (2).

5. Eddy current sensor according to claim 1, **characterised in that** the coil element (52) forms an isolator and a housing (53) of the electrode, which housing (53) is arranged around the measuring coil (2), wherein the housing (53) can be produced from a conductive, non-ferromagnetic material, in particular a stainless steel.

6. Eddy current sensor according to any one of claims 1 to 5, **characterised in that** the electrical resistance of the intermediate layer (5; 33; 54; 65; 72; 92) has a negative or positive temperature coefficient.

7. Eddy current sensor according to any one of claims 1 to 6, **characterised in that** the electrical resistance value of the electrode (4; 32; 42; 64; 77; 93) per unit length is much less than the impedance of the measuring coil (2) per unit length.

8. Eddy current sensor according to any one of claims 1 to 7, **characterised in that** the measuring probe (3; 62; 73) is in the form of an electrically conductive ring which is arranged around the measuring coil (2), wherein the measuring probe (44) within the coil element (42; 52) is arranged for displacement in a duct (43) which is arranged parallel with the coil axis.

9. Eddy current sensor according to any one of claims 1 to 8, **characterised in that** the electrode (4; 32; 42; 64; 77; 93), the intermediate layer (5; 33; 52; 65; 72; 92) and the coil element (32; 42; 54; 64; 77) are aligned with their respective longitudinal axes parallel with the axis of the measuring coil (2) and/or the displacement of the measuring probe (3; 44; 62; 73) is effected parallel with the axis of the measuring coil (2).

10. Eddy current sensor according to any one of claims 1 to 9, **characterised in that** the coil element (64) forms a closed ring or a tube and the measuring probe (62) for detecting angular changes is arranged for displacement along the ring or tube.

11. Eddy current sensor according to any one of claims 1 to 10, **characterised in that** both connections (6, 7) of the measuring coil (2) are connected to an alternating voltage source (70) and the evaluation circuit (74) has an operational amplifier (75) whose inverting input (76) is connected to the pickup (8) of the electrode (4; 32; 42; 64; 77; 93), wherein an alternating voltage can be applied between the pickup (8) of the electrode (4; 32; 42; 64; 77; 93) and a connection (7) of the measuring coil (2) and the second connection (6) of the measuring coil (2) can be connected to an inverting input (76) of an operational amplifier (75) of the evaluation circuit (74), wherein the measuring coil (2) can have a further connection, in particular in the form of a central pickup (81) of the measuring coil (2), which can be connected via a low pass filter (82) to an inverting input (76) of an operational amplifier (75) and wherein the pickup (8) of the electrode (77) can be connected to the earth.

12. Eddy current sensor according to any one of claims 1 to 11, **characterised in that** the measuring coil (2) has bare wires which are wound with specific spacing from each other.

13. Eddy current sensor according to any one of claims 1 to 12, **characterised in that** all of the components of the sensor are arranged on a chip in miniaturised form, for example, in the form of magneto-resistive or photo-resistive structures.

## Revendications

1. Capteur à courants de Foucault avec une bobine de mesure (2) enroulée sur un corps de bobine (32 ; 42 ; 52 ; 64) avec deux connexions (6, 7), une source de tension alternative (70), une sonde de mesure (3 ; 44 ; 62 ; 73) électriquement conductrice et un circuit d'interprétation (74), la sonde de mesure (3 ; 44 ; 62 ; 73) étant coulissante par rapport à la bobine de mesure (2) et le circuit d'interprétation (74) émettant'un signal d'interprétation (Uout) en dépendance de la position de la sonde de mesure (3 ; 44 ; 62 ; 73),
**caractérisé en ce que** le capteur à courants de Foucault (1 ; 31 ; 41 ; 51 ; 61 ; 71 ; 91) présente une électrode (4 ; 32 ; 42 ; 64 ; 77 ; 93) avec une prise (8) de mise en contact électrique, qui forme avec les enroulements de la bobine de mesure (2) et une couche intermédiaire (5 ; 33 ; 54 ; 65 ; 72 ; 92) un élément de construction à impédances complexes par les signaux de sortie duquel la position de la sonde de mesure (3 ; 44 ; 62 ; 73) peut être déterminé.

2. Capteur à courants de Foucault selon la revendication 1,
**caractérisé en ce que** l'électrode (4 ; 32 ; 42 ; 64 ; 77 ; 93) est réalisée sous forme de piste ou de plaque conductive et est disposée parallèlement à l'axe de la bobine de mesure (2).

3. Capteur à courants de Foucault selon la revendication 1,
**caractérisé en ce que** l'ensemble du corps de bobine (32 ; 42 ; 64 ; 77) est réalisé sous forme d'électrode et est constitué d'un matériau à faible résistance électrique, en particulier un matériau ferromagnétique.

4. Capteur à courants de Foucault selon l'une des revendications 1 à 3,
**caractérisé en ce que** la couche intermédiaire (5 ; 33 ; 54 ; 65 ; 72 ; 92) isole électriquement les enroulements de la bobine de mesure (2) par rapport à l'électrode (4 ; 32 ; 42 ; 64 ; 77 ; 93), est fabriquée de préférence en un matériau à haute résistance électrique et est le cas échéant une couche d'isolation du fil de bobinage de la bobine de mesure (2).

5. Capteur à courants de Foucault selon la revendication 1,
**caractérisé en ce que** le corps de bobine (52) forme un isolateur et un boîtier (53) de l'électrode disposé autour de la bobine de mesure (2), le bottier (53) pouvant être fabriqué en un matériau conducteur non ferromagnétique, en particulier un acier inoxydable.

6. Capteur à courants de Foucault selon l'une des revendications 1 à 5,
**caractérisé en ce que** la résistance électrique de la couche intermédiaire (5 ; 33 ; 54 ; 65 ; 72 ; 92) présente un coefficient de température négatif ou positif.

7. Capteur à courants de Foucault selon l'une des revendications 1 à 6,
**caractérisé en ce que** la résistance électrique de l'électrode (4 ; 32 ; 42 ; 64 ; 77 ; 93) par unité de longueur est bien inférieure à l'impédance de la bobine de mesure (2) par unité de longueur.

8. Capteur à courants de Foucault selon l'une des revendications 1 à 7,
**caractérisé en ce que** la sonde de mesure (3 ; 62 ; 73) est réalisée sous forme d'un anneau électriquement conducteur disposé autour de la bobine de mesure (2), la sonde de mesure (44) étant disposée coulissante à l'intérieur du corps de bobine (42 ; 52) dans un canal (43) disposé parallèle à l'axe de la bobine.

9. Capteur à courants de Foucault selon l'une des revendications 1 à 8,
**caractérisé en ce que** l'électrode (4 ; 32 ; 42 ; 64 ; 77 ; 93), la couche intermédiaire (5 ; 33 ; 52 ; 65 ; 72 ; 92) et le corps de bobine (32 ; 42 ; 54 ; 64 ; 77) sont orientés respectivement par leurs axes longitudinaux parallèlement à l'axe de la bobine de mesure (2) et/ou la déviation de la sonde de mesure (3 ; 44.; 62 ; 73) se produit parallèlement à l'axe de la bobine de mesure (2).

10. Capteur à courants de Foucault selon l'une des revendications 1 à 9,
**caractérisé en ce que** le corps de bobine (64) forme un anneau fermé ou un tube et la sonde de mesure (62) est montée coulissante le long de l'anneau ou respectivement du tube pour la détection de variations angulaires.

11. Capteur à courants de Foucault selon l'une des revendications 1 à 10,
**caractérisé en ce que** les deux connexions (6, 7) de la bobine de mesure (2) sont reliées à une source de tension alternative (70) et le circuit d'interprétation (74) présente un amplificateur opérationnel (75) dont l'entrée (76) inversante est reliée à la prise (8) de l'électrode (4 ; 32 ; 42 ; 64 ; 77 ; 93), une tension alternative pouvant exister entre la prise (8) de l'électrode (4 ; 32 ; 42 ; 64 ; 77 ; 93) et une connexion (7) de la bobine de mesure (2) et la deuxième connexion (6) de la bobine de mesure (2) pouvant être reliée à une entrée (76) inversante d'un amplificateur opérationnel (75), la bobine de mesure (2) pouvant présenter une connexion supplémentaire, en particulier sous forme de prise médiane (82) de la bobine de mesure (2), qui peut être reliée par l'intermédiaire d'un passe-bas (82) à une entrée (76) inversante d'un amplificateur opérationnel (75) et la prise (78) de l'électrode (77) pouvant être reliée à la masse.

12. Capteur à courants de Foucault selon l'une des revendications 1 à 11,
**caractérisé en ce que** la bobine de mesure (2) présente des fils métalliques nus enroulés à un écartement déterminé les uns des autres.

13. Capteur à courants de Foucault selon l'une des revendications 1 à 12,
**caractérisé en ce que** l'ensemble des composants du capteur est réalisé miniaturisé sur une microplaquette, par exemple sous forme de structure magnétorésistive ou photorésistive.
